# EUROPEAN PATENT SPECIFICATION

(11) **EP 1 658 134 B1**
(45) Date of publication and mention of the grant of the patent: **23.07.2008**
(21) Application number: 04782243.2
(22) Date of filing: 26.08.2004
(51) Int. Cl.: B01J 19/30, B01D 53/50, F28D 17/02

(54) **CERAMIC PACKING ELEMENT WITH ENLARGED FLUID FLOW PASSAGES**
KERAMISCHES PACKUNGSELEMENT MIT VERGRÖSSERTEN FLUIDKANÄLEN
ELEMENT D'EMBALLAGE CERAMIQUE POURVU DE PASSAGES DE FLUX DE FLUIDES ELARGIS

(30) Priority: 27.08.2003 US 498150 P; 23.12.2003 US 744381
(43) Date of publication of application: 24.05.2006
(73) Proprietor: Saint-Gobain Ceramics & Plastics, Inc., Stow, OH 44224 (US)
(72) Inventor: NIKNAFS, Hassan, S., Stow, OH 44224 (US); MILLER, Robert, L., Stow, OH 44224 (US)
(74) Representative: Leidescher, Thomas
(86) International application number: PCT/US2004/027723
(87) International publication number: WO 2005/021152

(56) References cited:
- WO-A-03/074168
- DE-A- 10 208 711
- US-A- 3 853 485
- US-A- 6 007 915

## Description

### BACKGROUND OF THE INVENTION

### FIELD OF THE INVENTION

The invention relates to packing elements of the type that are often called "random" or "dumped" packings. In particular, it relates to a packing element having a plurality of through passages for promoting air flow, and will be described with particular reference thereto.

### DISCUSSION OF THE ART

Random or dumped packings are used to fill towers units in which mass or heat transfer processes occur. A particularly important application is the use of such ceramic elements in heat recovery operations where it is necessary to provide maximum effective contact with hot fluids passing through the reactor. Another key factor in maximizing efficiency is the maintenance of as low a pressure difference between top and bottom of the tower as possible. To ensure this the packing elements should present the minimum resistance to flow. This is promoted by very open structures but open structure alone is of limited use if the elements in the tower nest together such that parts of one packing element penetrate within the space of a second element. It is therefore important that the design of the elements minimize the tendency of the elements to nest together.

Ceramic packing elements can be produced by an extrusion or a dry-pressing process and hence have an essentially uniform cross-section along one axial direction which provides an axis of symmetry for the element. Several such shapes have been described in the art ranging from the very simple to the complex. All are based on an essentially cylindrical shape and differ basically in the internal structure within the cylindrical shape. The simplest structure is a basic cylinder with no internal structure at all. This type of structure is often called a Raschig ring and has been known for many years. At the other end of the complexity scale are the structures described in US Design Patent 445,029 and USP 6,007,915. Between the extremes there are simple wagon-wheel shapes such as are described in USPP 3,907,710 and 4,510,263.

USP 3,853,485 to Hogan discloses a. core member for a catalytic oxidation converter with a pattern of passages. The member has a diameter which is substantially greater than an axial length of the member.

The present invention provides a new and improved ceramic packing element and method of use which overcome the above-referenced problems and others.

### SUMMARY OF THE INVENTION

In accordance with one aspect of the present invention, a ceramic packing element is provided. The packing element has a polygonal structure with a plane of symmetry in a direction defining a length of the element and a greatest dimension perpendicular to the length defining a diameter of the element. A ratio of the diameter to the length is from 2.7 to 4.5. The element is provided with a plurality of internal septa defining a plurality of identical first passages through the element each of which has a first cross-sectional area and a plurality of second passages of a larger cross sectional area than that of one of the first passages, at least one of the second passages having a cross sectional area which is at least four times that of one of the first passages.

The advantage of the present invention will be readily apparent to those skilled in the art, upon a reading of the following disclosure and a review of the accompanying drawings.

### BRIEF DESCRIPTION OF THE DRAWINGS

FIGURE 1 is a perspective view of a comparative packing element from a point below and to one side, looking directly at one of the corners;
FIGURE 2 shows a top view of the same element as is shown in FIGURE 1;
FIGURE 3 is a top view of a comparative element with an axially located larger channel;
FIGURE 4 is a perspective view of an element with three larger hexagonally-shaped channels according to the present invention;
FIGURE 5 is a top plan view of an element with three larger diamond-shaped channels according to the present invention;
FIGURE 6 is a graph of the percentage thermal recovery against gas flow rate; and
FIGURE 7 is a computer generated plot of predicted pressure drop penalties in inches of water for a conventional 40x40 cell monolith, an element according to FIGURE 4, and an element according to FIGURE 3, as compared with a theoretically perfect packing element.

### DETAILED DESCRIPTION OF THE PREFERRED EMBODIMENT

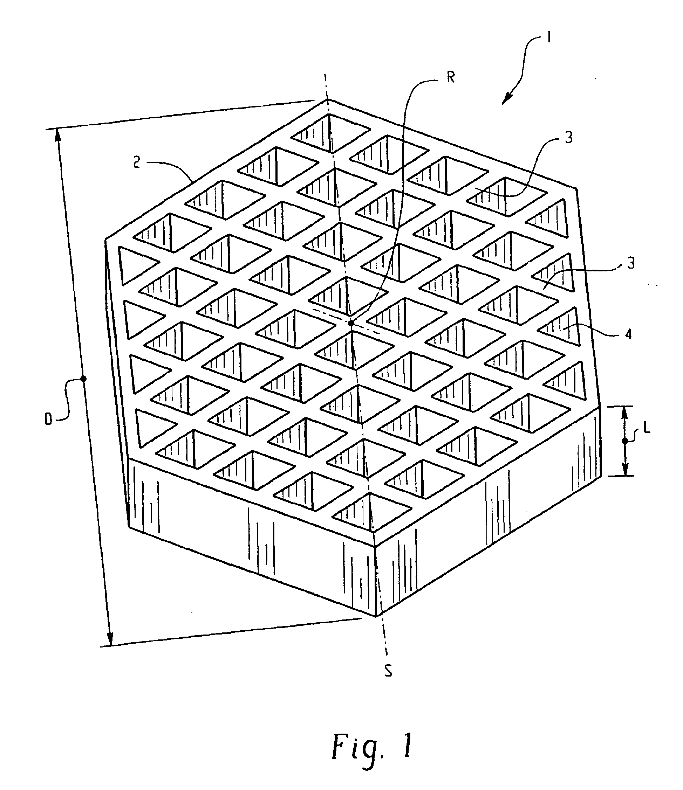

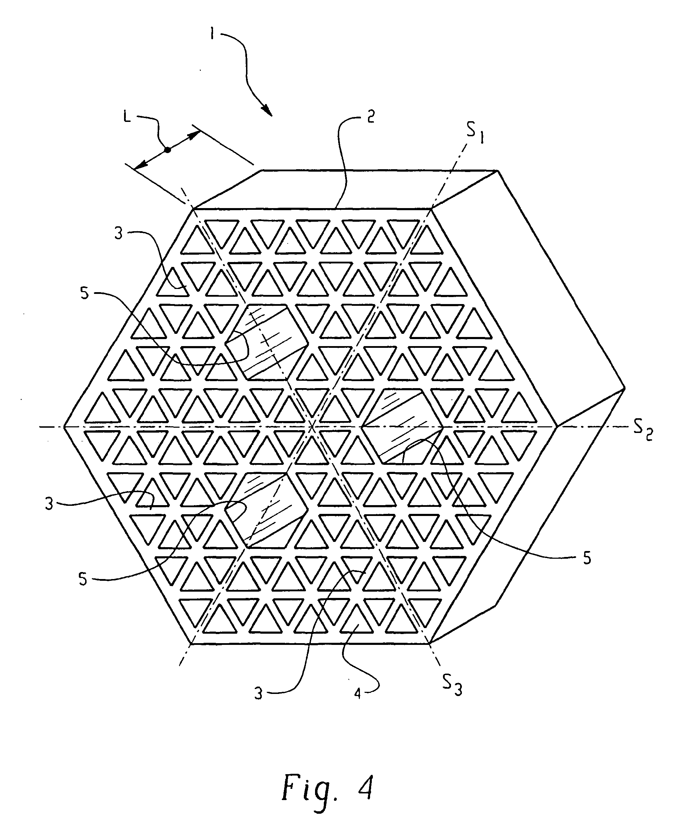

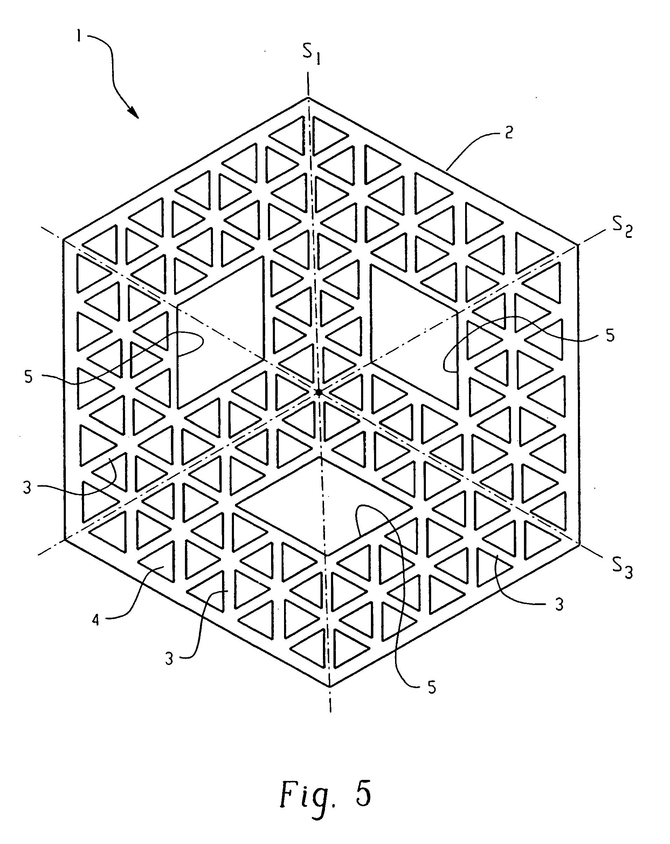

The invention is now more particularly described with reference to the embodiments illustrated in the Drawings. FIGURES 1-3 show comparative structures for comparison with the structures of FIGURES 4 and 5.

A ceramic packing element is defined as having a containing structure that is essentially cylindrical in shape and this is understood to include perfect cylinders and shapes in which a round cylindrical shape has been somewhat flattened to create an oval cross-section as well as regular and irregular polygonal shapes with at least five sides. The space within the containing structure can have a plurality of septa or none but since a primary application is in the field of heat transfer in which surface area becomes very significant, it is preferred that significant internal structures are provided. In the context of this invention the term "septum" (plural "septa") is used to describe structural member connecting one interior part of the cylindrical containing structure with another and/or with another septa. It therefore includes structures with lengths up to and including a diameter or maximum dimension of the element.

The ceramic elements of the invention can be formed from any suitable ceramic material such natural or synthetic clays, zeolites, cordierites, aluminas, zirconia, silica or mixtures of these. The formulation can be mixed with bonding agents, extrusion aids, pore formers, lubricants and the like to assist in the extrusion process and/or to generate the desired porosity or surface area for the intended application.

Where the ceramic packing elements are produced by an extrusion or a dry-pressing process, they can have an essentially uniform cross-section along one axial direction which provides an axis of radial symmetry for the element.

The elements can be used in heat and mass transfer applications or as bases upon which catalytic components are deposited. The elements are particularly suitable for heat transfer applications involving heat recovery from streams of hot gases. An example of such an application is found in thermal regenerators attached to plants whose function is to burn off any combustible material from a waste gas stream. In such regenerators it is important for efficient operation that the heat values from the exhaust gas stream be used to heat up the incoming waste gas to be treated so as to minimize the cost of fuel required to burn off the combustible material. The present invention teaches a way to optimize the element design to achieve this end.

Mass transfer applications include the transfer of mass in the form of one or more components between first and second fluids, which may be liquids or a liquid and a gas. The ceramic elements act as a provider of a wetted surface for the liquid phase, facilitating the transfer of components between the fluids. Exemplary mass transfer applications include the removal of gas components, such as sulfur dioxide, from a flowing gas stream. An important mass transfer application of the ceramic elements is in sulfuric acid plant absorbers.

The elements can however be used with advantage in any application in which the surface area is an important factor in determining the efficiency with which the elements perform their assigned task.

In some cases in which the element has internal septa subdividing the space within the element into a plurality of channels it is advantageous to provide that the element has an axially located aperture. This can be of any desired shape but to avoid excessive disruption of the septa structure it can be the result of removing septa separating some of the channels to form a larger combined channel.

One exemplary structure know from WO 03/074168 comprises a containing structure that is hexagonal with each pair of opposed corners connected by a septum and parallel septa on either side connect the sides meeting at those opposed corners. The overall effect is to provide a plurality of triangular passages or channels through the element, each of essentially the same dimensions. Elements of this design are illustrated in FIGURES 1-2.

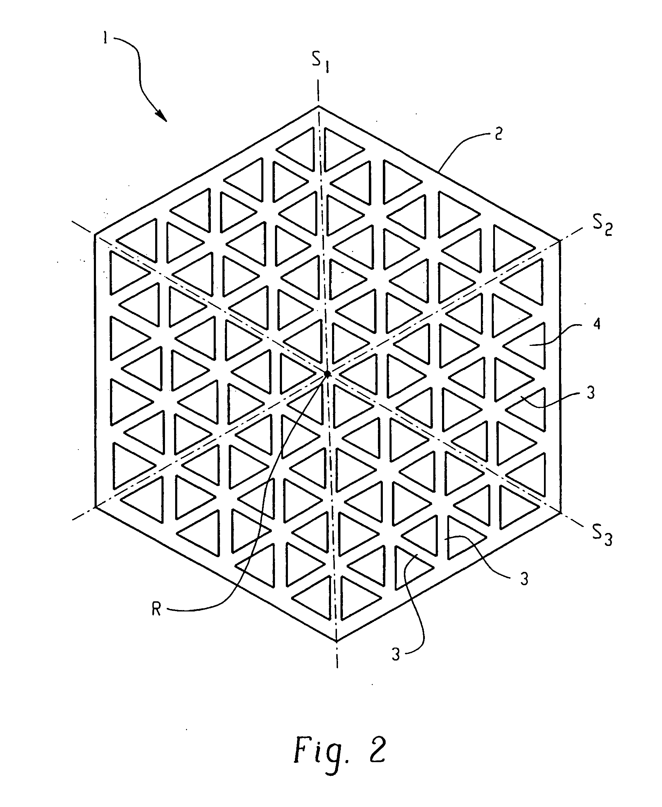

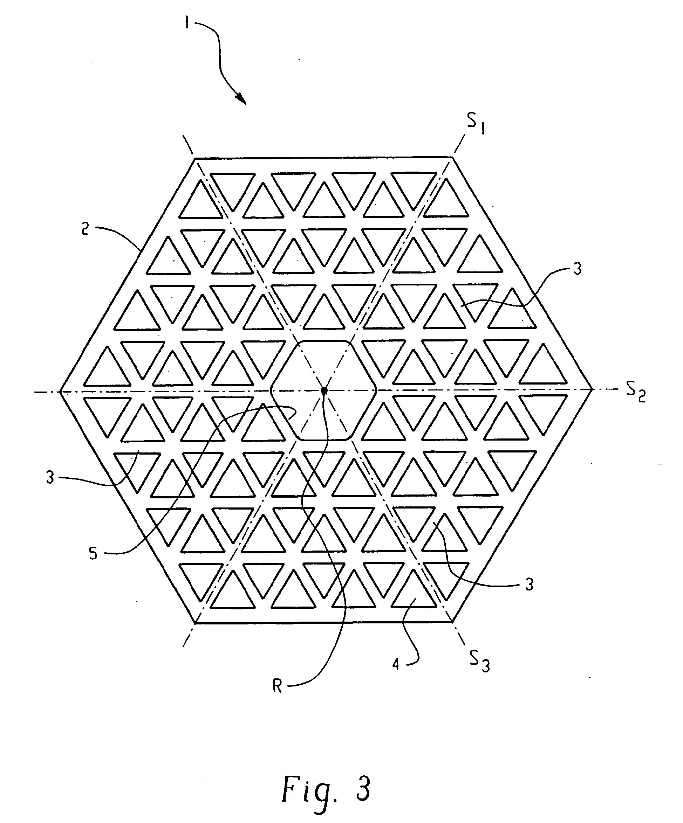

Another exemplary element known from WO 03/074168 has a single larger passage, which may be centrally located, as illustrated in FIGURE 3. This element is based on the design of FIGURE 2, with six of the triangular passages around the center combined to form a larger centrally located passage.

In the embodiments of the invention, two or more larger passages are provided, at least some of which may be equidistant from the central axis and from each other, as shown in FIGURES 4 and 5.

With particular reference to FIGURE 1, a packing element 1 includes a hexagonal containing structure 2. A plurality of septa 3 divides the interior space into a plurality of first passages 4 through the element. The packing element of FIGURE 1 has primarily diamond-shaped first passages 4, with a row of triangular first passages along two opposed sides of the element. The element 1 has a plane of symmetry S, parallel with a length L of the element, which passes through a central axis of rotation R. By central axis of rotation, it is meant that the element can be rotated about its central axis through an angle of 360/(number of planes of symmetry) to an identical conformation. For FIGURE 1, the angle is thus 180°.

FIGURE 2, shows a similar packing element 1, in which the first passages 4 are all identical in size and generally triangular in shape. The element 1 of FIGURE 2 has three planes of symmetry S₁, S₂, S₃, parallel with the length L, which pass through a central axis R.

The packing element of FIGURE 2 has ninety first passages, although benefits in thermal recovery can be obtained by increasing the number of first passages (by employing a larger number of internal septa) particularly when at least one larger passage 5 is also provided, as illustrated in FIGURES 3-5.

The packing elements of FIGURES 3-5 are similar to that of FIGURE 2 except in that they also have at least one larger passage 5 in additional to the first passages 4. Where one larger passage 5 is used, this can be placed at the axis, as illustrated in FIGURE 3. The element 1 of FIGURE 3 has three planes of symmetry S₁, S₂, S₃, parallel with the length L, which pass through a central axis R. The area of the larger passage 5 corresponds to that created by removing those portions of the internal septa which would otherwise define the ring of smaller passages most closely adjacent to the central axis. An area of approximately six times that of the smaller passages is thus provided in the element of FIGURE 3, although it will be appreciated that larger passages 5 may be created by combining a greater or smaller number of the smaller passages 4. In one embodiment, the area of the larger passage is at least four, and preferably at least six, times that of the majority of the first passages 4. For example, a packing element could be formed similar to that of FIGURE 1 in which four of the diamond passages are combined to provide a larger diamond-shaped passage 5. Where two or more larger passages are used, these can be spaced from the central axis R as shown in FIGURES 4 and 5. For example, as shown in FIGURES 4 and 5, where three larger passages are employed, each larger passage is centered along a respective plane of symmetry S₁, S₂, S₃, which joins opposed corners, parallel with the length L, and which passes through the central axis R.

The larger passages 5 may be located somewhat closer to the central axis R than to the respective adjacent corner, as illustrated, to provide an improved fluid flow pattern. In FIGURE 4, the larger passages 5 are hexagonal, occupying at least about six times the area occupied by one of the smaller triangular passages 4 which they replace (i.e., slightly larger than six times because of the space occupied by the omitted septa). In FIGURE 5, the diamond-shaped passages occupy at least about eight times the area occupied by one of the smaller triangles 4 which they replace.

The element 1 of FIGURES 1-5 can have a length L, along the axis of symmetry R, and a greatest dimension D, perpendicular to the axis of symmetry. In the Drawings the ratio of D:L is about 4. Where the structure is extruded, the axis of symmetry R may be in the direction of extrusion of the structure. The dimensions of the shapes of the packing elements have been found to assist in achieving optimum performance and the benefits of selecting dimensions in these ranges has not been appreciated in the prior art.

The ceramic packing element can have a ratio of a number of the larger passages 5 to a number of the smaller passages 4 of from about 1:10 to about 1:60. In one embodiment, the ratio of the number of the second passages to the number of the first passages is from about 1:30 to about 1:50. A ratio of the total cross sectional area (measured in a plane perpendicular to the length L of the structure) of the second passages to the total cross sectional area of the first passages can be from about 1:10 to about 1:4. In one embodiment, the ratio the total area of the second passages to the total area of the first passages is from about 3:20 to about 4:20.

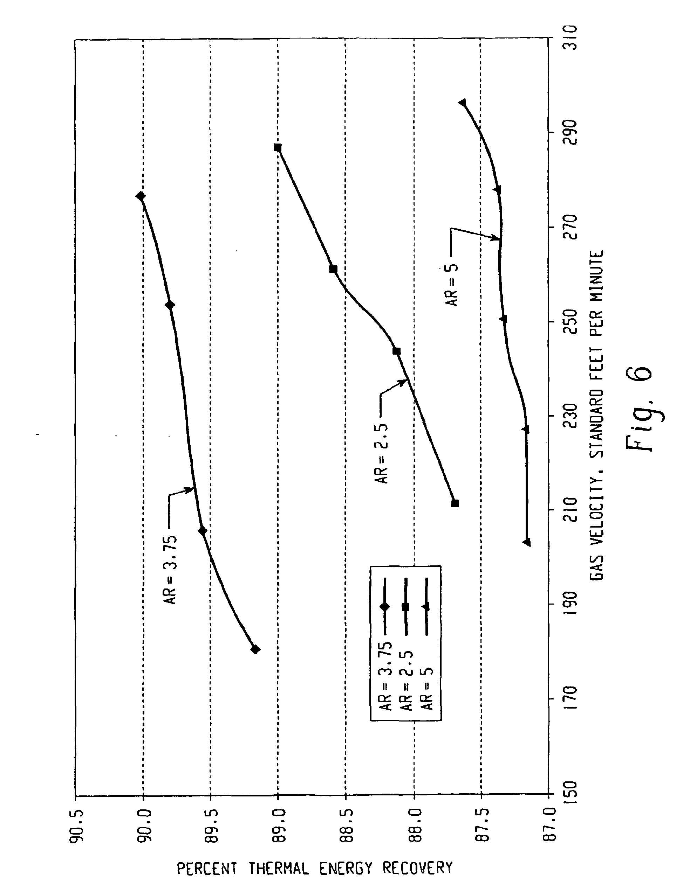

To demonstrate the significance of aspect ratio (D:L), ceramic elements were prepared with three different aspect ratios. These elements were then placed in a tube through which a gas stream at 1500°F, (815.6°C), was passed at different flow rates. The percentage of the thermal energy in the stream recovered through the contact with the media was measured and plotted against the aspect ratio. The percentage thermal energy recovery was then determined as a function of the gas velocity for each of the three elements. The results are shown in FIGURE 6. For efficient thermal energy recovery, an aspect ratio of from 2.5 and 15 may be selected. In particular, an aspect ratio of about 2.7 and 4.5, and more particularly, between about 3.0 and 4.4 can be selected.

This result is completely unexpected since there is no prior art teaching that points in this direction. It is also clearly extremely advantageous that as much thermal energy as possible be recovered by each passage though the elements.

The advantage of the D:L ratio are also found in mass transfer applications.

Improvements in thermal and mass recovery are found by providing a plurality of larger passages 5 in addition to the smaller passages. While not fully understood, it is proposed that the larger passages 5 are most effective in directing the heated fluid through the packing element, to contact packing elements deeper in the bed, while the smaller passages 4 contribute most effectively in transfer of heat/mass, by bringing the heated gas flow in contact with the septa 3. By having a combination of larger and smaller passages, both of these functions can be achieved in a single packing element 1.

It will be appreciated that the greater the number of larger passages 5 which are employed and/or the larger the void volume occupied by the larger passages, the larger the void volume of the packing element as a whole will be. Although this leads to enhanced flow through the packing element and a lower pressure drop across a bed of such elements, there is generally a trade off between minimizing the pressure drop and achieving a high thermal efficiency (the percentage of heat recovered). It has been found that the packing element of FIGURE 4, which is about 28% larger in diameter (as measured between opposite corners) than that of FIGURE 3 (achieved, for example, by adding an additional row of triangles along each side of the packing element), but which has three larger passages in place of one, shows improved performance as compared with both the single central passage of FIGURE 3 and the element of FIGURE 2.

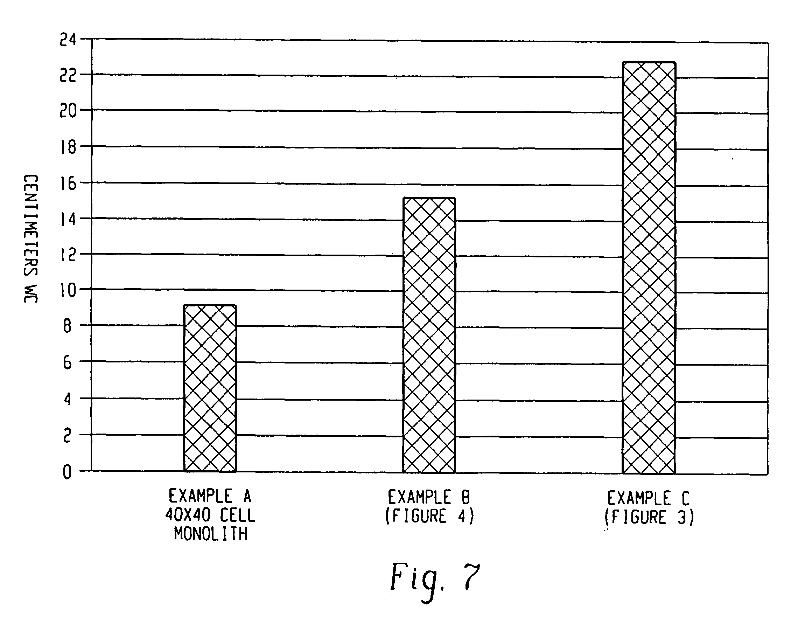

These improvements are shown graphically in FIGURE 7, which shows the pressure drop in inches of water for three beds as compared to a theoretically optimal bed of packing elements. Three examples are illustrated, Example A being a conventional 40x40 cell monolith, Example B being formed from packing elements of FIGURE 4 and Example C being formed from packing elements of FIGURE 3. The Example B packing elements are of comparable D/L ratio to those of Example C, but are about 28% larger in diameter (as measured between opposite corners). The pressure drops are calculated theoretically by estimating the thickness of a bed which would be needed to achieve a 94% thermal efficiency and determining the relative pressure drop of such a bed as compared with the theoretically optimal bed of packing elements. A 40x40 cell monolith is a large ceramic element, which has to be installed block by block with proper orientation inside canisters to achieve good thermal recovery results (as opposed to the "dumped" packing elements of FIGURES 3 and 4) and suffers from problems such as cracking and/or spalling, resulting in improper operation of the bed. Thus, even though the monolith shows the lowest pressure drop of the three illustrated (i.e., is a good thermal recovery material), its disadvantages make it less suited to most thermal recovery applications.

The pressure drop penalties of the beds of packing elements B and C can also be compared with those for a conventional saddle shaped packing element of 2.5 cm in length and a "snowflake" shaped packing element of the type described in US Design Patent 445,029. Both of these latter elements have higher calculated pressure drop penalties than the beds of packing elements B and C. For example, for 95% thermal efficiency, the saddle shaped packing element has a pressure drop penalty of 30.7 cm water, the snowflake, a pressure drop penalty of 19.8 cm water, and the Example C element, a pressure drop penalty of 16.7 cm water.

It will also be appreciated that the "theoretically optimal" bed is optimal only so far as its pressure drop is concerned, since other properties, such as structural strength of the packing elements, are also important in determining the usefulness of the media. The pressure drop of beds of the packing elements of FIGURES 3 and 4 is much lower than in a conventional bed of dumped packing elements, while having a longer useful life due to the structural strength of the elements.

## Claims

1. A ceramic packing element (1) **characterized by**:
a polygonal structure (2) comprising a plane of symmetry in a direction defining a length (L) of the element and a greatest dimension (D) perpendicular to the length defining a diameter of the element, a ratio of the diameter to the length being from 2.7 to 4.5, the element being provided with a plurality of internal septa (3) defining a plurality of identical first passages (4) through the element each of which has a first cross-sectional area and a plurality of second passages (5) of a larger cross sectional area than that of one of the first passages, at least one of the second passages having a cross sectional area which is at least four times that of one of the first passages.

2. A ceramic packing element according to Claim 1, further **characterized by**:
the ratio of the diameter to the length being from 3.0 to 4.4.

3. A ceramic packing element according to Claim 2, further **characterized by**:
the ratio of the diameter to the length being from 3.5 to 4.0.

4. A ceramic packing element according to Claim 3, further **characterized by**:
the element comprising at least twenty of the first passages (4).

5. A ceramic packing element according to Claim 4, further **characterized by**:
the element comprising at least fifty of the first passages.

6. A ceramic packing element according to any one of Claims 1 - 5, further **characterized by**:
a ratio of a number of the second passages to a number of the first passages being from about 1:10 to about 1:1600.

7. A ceramic packing element according to Claim 6, further **characterized by**:
the ratio of the number of the second passages to the number of the first passages being from about 1:20 to about 1:60.

8. A ceramic packing element according to Claim 7, further **characterized by**:
the ratio of the number of the second passages to the number of the first passages being from about 1:30 to about 1:50.

9. A ceramic packing element according to any one of Claims 1 - 8, further **characterized by**:
a ratio of total cross sectional area of the second passages to total cross sectional area of the first passages being from about 1:10 to about 1:4.

10. A ceramic packing element according to any one of Claims 1 - 9, further **characterized by**:
a plurality of the septa each intersecting at least two other septa at spaced apart locations along a length of each of the plurality of the septa.

11. A ceramic packing element according to any one of Claims 1 - 10, further **characterized by**:
the polygonal structure having at least five sides.

12. A ceramic packing element according to Claim 11, further **characterized by**:
the polygonal structure having six sides.

13. A ceramic packing element according to any one of Claims 1 - 12, further **characterized by**:
the first passages each having a triangular cross-section.

14. A ceramic packing element according to any one of Claims 1 - 13 further **characterized by**:
the second passages each having a cross sectional area equivalent to that which would be formed by combining a plurality of adjacent first passages.

15. A ceramic packing element according to Claim 14, further **characterized by**:
the second passages each having an area equivalent to that which would be formed by combining at least six adjacent first passages.

16. A ceramic packing element according to any one of Claims 1 - 15, further **characterized by**:
there being at least three second passages.

17. A ceramic packing element according to Claim 16, further **characterized by**:
the three second passages being equidistant from each other.

18. A ceramic packing element according to either one of Claims 16 and 17, further **characterized by**:
the three second passages being equidistant from a central axis of the element.

19. A ceramic packing element according to any one of Claims 1 - 18, further **characterized by**:
the ceramic being made from a material selected from the group consisting of natural clays, synthetic clays, aluminas, zeolites, cordierite, zirconia, silica, and mixtures thereof.

20. A ceramic packing element according to any one of Claims 1 - 19, further **characterized by**:
all of the septa in the packing element comprising first and second ends, the septa being connected with polygonal structure adjacent at least the first end.

21. A ceramic packing element according to any one of Claims 1 - 20, further **characterized by**:
the cross section of the at least one second passage corresponding to that which would be formed by removal of portions of internal septa separating six adjacent first passages.

22. A method of performing at least one of transferring heat to or from a fluid stream and transferring mass between fluid phases, the method **characterized by**:
flowing the fluid stream through a bed of the ceramic packing elements of claim 1, the packing elements performing at least one of transferring the heat and providing a surface at which the transfer of mass takes place between the fluid phases.

23. The method of Claim 22, further **characterized by**:
transferring heat to or from a fluid stream comprising:
flowing the fluid stream through the bed of ceramic packing elements, the packing elements transferring heat, the at least one second passage having a cross section which corresponds to that which would be formed by combining four or more adjacent first passages, thereby reducing the pressure drop as compared to that across a bed of packing elements which are equivalent except in that the larger passages are absent.

24. The method of claim 22 further **characterized by**:
the packing elements transferring the heat between the fluid stream and the packing elements.

25. A method of mass transfer according to Claim 22, further **characterized by**:
the transferring of mass including transferring sulfur dioxide between fluid phases.

## Patentansprüche

1. Keramikpackelement (1), **dadurch gekennzeichnet,**
**dass** eine polygonale Struktur (2) eine Symmetrieebene in einer Richtung, die eine Länge (L) des Elements definiert, und ein Größtmaß (D), senkrecht zur Länge, das einen Durchmesser des Elements definiert, umfasst, wobei ein Verhältnis des Durchmessers zu der Länge 2,7 bis 4,5 beträgt, wobei das Element mit einer Mehrzahl an inneren Septen (3) versehen ist, die eine Mehrzahl an identischen ersten Durchgängen (4) durch das Element, wobei jedes davon einen ersten Querschnittsbereich aufweist, und eine Mehrzahl an zweiten Durchgängen (5) mit einem größeren Querschnittsbereich als diejenigen der ersten Durchgänge definieren, wobei mindestens einer der zweiten Durchgänge einen Querschnittsbereich aufweist, der mindestens das Vierfache von einem der ersten Durchgänge beträgt.

2. Keramikpackelement nach Anspruch 1, ferner **dadurch gekennzeichnet,**
**dass** das Verhältnis des Durchmessers zu der Länge 3,0 bis 4,4 beträgt.

3. Keramikpackelement nach Anspruch 2, ferner **dadurch gekennzeichnet,**
**dass** das Verhältnis des Durchmessers zu der Länge 3,5 bis 4,0 beträgt.

4. Keramikpackelement nach Anspruch 3, ferner **dadurch gekennzeichnet,**
**dass** das Element mindestens zwanzig der ersten Durchgänge (4) umfasst.

5. Keramikpackelement nach Anspruch 4, ferner **dadurch gekennzeichnet,**
**dass** das Element mindestens fünfzig der ersten Durchgänge umfasst.

6. Keramikpackelement nach einem der Ansprüche 1-5, ferner **dadurch gekennzeichnet,**
**dass** ein Verhältnis einer Anzahl der zweiten Durchgänge zu einer Anzahl der ersten Durchgänge etwa 1:10 bis etwa 1:1600 beträgt.

7. Keramikpackelement nach Anspruch 6, ferner **dadurch gekennzeichnet,**
**dass** das Verhältnis der Anzahl der zweiten Durchgänge zu der Anzahl der ersten Durchgänge etwa 1:20 bis etwa 1:60 beträgt.

8. Keramikpackelement nach Anspruch 7, ferner **dadurch gekennzeichnet,**
**dass** das Verhältnis der Anzahl der zweiten Durchgänge zu der Anzahl der ersten Durchgänge etwa 1:30 bis etwa 1:50 beträgt.

9. Keramikpackelement nach einem der Ansprüche 1-8, ferner **dadurch gekennzeichnet,**
**dass** ein Verhältnis des Gesamtquerschnittsbereichs der zweiten Durchgänge zu dem Gesamtquerschnittsbereich der ersten Durchgänge etwa 1:10 bis etwa 1:4 beträgt.

10. Keramikpackelement nach einem der Ansprüche 1-9, ferner **dadurch gekennzeichnet,**
**dass** eine Mehrzahl der Septen jeweils mindestens zwei andere Septen an voneinander beabstandeten Orten entlang einer Länge von jedem der Mehrzahl der Septen schneidet.

11. Keramikpackelement nach einem der Ansprüche 1-10, ferner **dadurch gekennzeichnet,**
**dass** die polygonale Struktur mindestens fünf Seiten aufweist.

12. Keramikpackelement nach Anspruch 11, ferner **dadurch gekennzeichnet,**
**dass** die polygonale Struktur mindestens sechs Seiten aufweist.

13. Keramikpackelement nach einem der Ansprüche 1-12, ferner **dadurch gekennzeichnet,**
**dass** die ersten Durchgänge einen dreieckigen Querschnitt aufweisen.

14. Keramikpackelement nach einem der Ansprüche 1-13, ferner **dadurch gekennzeichnet,**
**dass** die zweiten Durchgänge jeweils einen Querschnittsbereich aufweisen, der demjenigen entspricht, der durch Vereinigen einer Mehrzahl an benachbarten ersten Durchgängen gebildet werden würde.

15. Keramikpackelement nach Anspruch 14, ferner **dadurch gekennzeichnet,**
**dass** die zweiten Durchgänge jeweils einen (Querschnitts) bereich aufweisen, der demjenigen entspricht, der durch Vereinigen von mindestens sechs benachbarten ersten Durchgängen gebildet werden würde.

16. Keramikpackelement nach einem der Ansprüche 1-15, ferner **dadurch gekennzeichnet,**
**dass** mindestens drei zweite Durchgänge dort vorliegen.

17. Keramikpackelement nach Anspruch 16, ferner **dadurch gekennzeichnet,**
**dass** die drei zweiten Durchgänge mit gleichem Abstand voneinander vorliegen.

18. Keramikpackelement nach einem der Ansprüche 16 und 17, ferner **dadurch gekennzeichnet,**
**dass** die drei zweiten Durchgänge mit gleichem Abstand von einer Mittelachse des Elements vorliegen.

19. Keramikpackelement nach einem der Ansprüche 1-18, ferner **dadurch gekennzeichnet,**
**dass** die Keramik aus einem Material hergestellt ist, das ausgewählt ist aus der Gruppe, bestehend aus natürlichen Tonen, synthetischen Tonen, Aluminiumoxiden, Zeolithen, Cordierit, Zirkoniumdioxid, Siliciumdioxid und Gemischen davon

20. Keramikpackelement nach einem der Ansprüche 1-19, ferner **dadurch gekennzeichnet,**
**dass** sämtliche der Septen im Verpackungselement erste und zweite Enden umfassen, wobei die Septen mit der polygonalen Struktur neben mindestens dem ersten Ende verbunden sind.

21. Keramikpackelement nach einem der Ansprüche 1-20, ferner **dadurch gekennzeichnet,**
**dass** der Querschnitt des mindestens einen zweiten Durchgangs demjenigen entspricht, der durch Entfernen von Teilen der inneren Septen, die sechs benachbarte erste Durchgänge trennen, gebildet werden würde.

22. Verfahren zum Durchführen von mindestens einem des Übertragens von Wärme zu oder von einem Fluidstrom und des Übertragens von Masse zwischen Fluidphasen, wobei das Verfahren **dadurch gekennzeichnet ist,**
**dass** der Fluidstrom durch ein Bett von Keramikpackelementen nach Anspruch 1 fließt, wobei die Packelemente von mindestens einem des Übertragens der Wärme und des Bereitstellens einer Oberfläche, auf welcher die Übertragung von Masse zwischen den Fluidphasen stattfindet, durchführen.

23. Verfahren nach Anspruch 22, ferner **dadurch gekennzeichnet,**
**dass** Wärme zu oder von einem Fluidstrom übertragen wird, umfassend
Fließen des Fluidstroms durch das Bett von Keramikpackelementen, wobei die Packelemente Wärme übertragen, der mindestens eine zweite Durchgang einen Querschnitt aufweist, der demjenigen entspricht, der durch Vereinigen von vier oder mehr benachbarten ersten Durchgängen gebildet werden würde, wodurch der Druckabfall verglichen mit demjenigen eines Betts von Packelementen, die gleichwertig sind, außer dass die größeren Durchgänge fehlen, reduziert wird.

24. Verfahren nach Anspruch 22, ferner **dadurch gekennzeichnet,**
**dass** die Packelemente die Wärme zwischen dem Fluidstrom und den Packelementen übertragen.

25. Verfahren der Massenübertragung nach Anspruch 22, ferner **dadurch gekennzeichnet,**
**dass** das Übertragen von Masse das Übertragen von Schwefeldioxid zwischen Fluidphasen einschließt.

## Revendications

1. Elément d'emballage céramique (1) **caractérisé par** :
une structure polygonale (2) comprenant un plan de symétrie dans une direction définissant une longueur (L) de l'élément et une dimension maximale (D) perpendiculaire à la longueur définissant un diamètre de l'élément, un rapport du diamètre à la longueur étant de 2,7 à 4,5, l'élément étant équipé d'une pluralité de cloisons internes (3) définissant une pluralité de premiers passages identiques (4) à travers l'élément, passages dont chacun a une première surface de section transversale et une pluralité de deuxièmes passages (5) à section transversale plus grande que celle d'un des premiers passages, au moins un des deuxièmes passages ayant une surface de section transversale qui représente au moins quatre fois celle d'un des premiers passages.

2. Elément d'emballage céramique selon la revendication 1, **caractérisé en outre par :**
**le fait que** le rapport du diamètre à la longueur va de 3,0 à 4,4.

3. Elément d'emballage céramique selon la revendication 2, **caractérisé en outre par :**
**le fait que** le rapport du diamètre à la longueur va de 3,5 à 4,0.

4. Elément d'emballage céramique selon la revendication 3, **caractérisé en outre par :**
**le fait que** l'élément comprend au moins vingt des premiers passages (4).

5. Elément d'emballage céramique selon la revendication 4, **caractérisé en outre par :**
**le fait que** l'élément comprend au moins cinquante des premiers passages (4).

6. Elément d'emballage céramique selon l'une quelconque des revendications 1 à 5, **caractérisé en outre par :**
**le fait qu'**un rapport d'un nombre de deuxièmes passages à un nombre de premiers passages va d'environ 1 : 10 à environ 1 : 1600.

7. Elément d'emballage céramique selon la revendication 6, **caractérisé en outre par :**
**le fait que** le rapport du nombre de deuxièmes passages au nombre de premiers passages va d'environ 1 : 20 à environ 1 : 60.

8. Elément d'emballage céramique selon la revendication 7, **caractérisé en outre par :**
**le fait que** le rapport du nombre de deuxièmes passages au nombre de premiers passages va d'environ 1 : 30 à environ 1 : 50.

9. Elément d'emballage céramique selon l'une quelconque des revendications 1 à 8, **caractérisé en outre par :**
**le fait qu'**un rapport de la surface de section transversale des deuxièmes passages à la surface de section transversale totale des premiers passages va d'environ 1 : 10 à environ 1 : 4.

10. Elément d'emballage céramique selon l'une quelconque des revendications 1 à 9, **caractérisé en outre par** :
une pluralité de cloisons se coupant chacune au niveau d'au moins deux autres cloisons à des emplacements espacés sur une longueur de chacune de la pluralité de cloisons.

11. Elément d'emballage céramique selon l'une quelconque des revendications 1 à 10, **caractérisé en outre par :**
**le fait que** la structure polygonale a au moins cinq côtés.

12. Elément d'emballage céramique selon la revendication 11, **caractérisé en outre par :**
**le fait que** la structure polygonale a au moins six côtés.

13. Elément d'emballage céramique selon l'une quelconque des revendications 1 à 12, **caractérisé en outre par :**
**le fait que** les premiers passages ont une section transversale triangulaire.

14. Elément d'emballage céramique selon l'une quelconque des revendications 1 à 13, **caractérisé en outre par :**
**le fait que** les deuxièmes passages ont chacun une section transversale équivalente à celle qui serait formée en combinant une pluralité de premiers passages adjacents.

15. Elément d'emballage céramique selon la revendication 14, **caractérisé en outre par :**
**le fait que** les deuxièmes passages ont chacun une surface équivalente à celle qui serait formée en combinant au moins six premiers passages adjacents.

16. Elément d'emballage céramique selon l'une quelconque des revendications 1 à 15, **caractérisé en outre par :**
**le fait qu'**il y a au moins trois deuxièmes passages.

17. Elément d'emballage céramique selon la revendication 16, **caractérisé en outre par :**
**le fait que** les trois deuxièmes passages sont équidistants les uns des autres.

18. Elément d'emballage céramique selon l'une quelconque des revendications 16 et 17, **caractérisé en outre par :**
**le fait que** les trois deuxièmes passages sont équidistants d'un axe central de l'élément.

19. Elément d'emballage céramique selon l'une quelconque des revendications 1 à 18, **caractérisé en outre par :**
**le fait que** la céramique est faite d'un matériau sélectionné parmi le groupe composé d'argile naturelle, d'argiles synthétiques, d'alumines, de zéolites, de cordiérite, de zirconium, de silice et leurs mélanges.

20. Elément d'emballage céramique selon l'une quelconque des revendications 1 à 19, **caractérisé en outre par :**
**le fait que** toutes les cloisons de l'élément d'emballage comportent une première et une deuxième extrémités, les cloisons étant connectées à une structure polygonale adjacente au moins à la première extrémité.

21. Elément d'emballage céramique selon l'une quelconque des revendications 1 à 20, **caractérisé en outre par :**
**le fait que** la section transversale de l'au moins un deuxième passage correspond à celle qui serait formée en enlevant des parties de la cloison interne séparant six premiers passages adjacents.

22. Procédé de réalisation d'au moins une opération sur un transfert de chaleur en direction ou en provenance d'un flux de fluide et un transfert de masse entre des phases de fluide, ce procédé étant **caractérisé par** :
l'écoulement du flux de fluide à travers un lit d'éléments d'emballage céramiques de la revendication 1, les éléments d'emballage réalisant au moins une opération sur le transfert de chaleur et la création d'une surface sur laquelle le transfert de masse a lieu entre les phases de fluide.

23. Procédé selon la revendication 22, **caractérisé en outre par** :
le transfert de chaleur en direction ou en provenance d'un flux de fluide, comprenant :
l'écoulement du flux de fluide à travers le lit d'éléments d'emballage céramiques, les éléments d'emballage transférant la chaleur, l'au moins un deuxième passage ayant une section transversale qui correspond à celle qui serait formée en combinant quatre premiers passages adjacents ou davantage, ce qui réduit la chute de pression comparativement à celle qui se produirait à travers un lit d'éléments d'emballage équivalents sauf que les passages plus grands sont absents.

24. Procédé selon la revendication 22, **caractérisé en outre par :**
**le fait que** les éléments d'emballage transfèrent la chaleur entre le flux de fluide et les éléments d'emballage.

25. Procédé de transfert de masse selon la revendication 22, **caractérisé en outre par :**
**le fait que** le transfert de masse inclut le transfert de dioxyde de soufre entre les phases de fluide.
